# EUROPÄISCHE PATENTSCHRIFT

(11) **EP 0 600 203 B1**
(45) Veröffentlichungstag und Bekanntmachung des Hinweises auf die Patenterteilung: **28.04.1999**
(21) Anmeldenummer: 93116844.7
(22) Anmeldetag: 19.10.1993
(51) Int. Cl.: C10G 7/08, B01D 3/06, C10G 7/06

(54) **Verfahren zum Weiterverarbeiten des Vakuumrückstandes in einer Rohölraffinerie**
Process for further treating a vacuum residue in a refinery
Procédé de traitement ultérieur d'un résidu de distillation tous vide dans une raffinerie

(30) Priorität: 30.11.1992 CH 3681/92
(43) Veröffentlichungstag der Anmeldung: 08.06.1994
(73) Patentinhaber: BUSS AG, CH-4052 Basel (CH)
(72) Erfinder: van der Piepen, Rolf, D-35510 Butzbach (DE)
(74) Vertreter: Patentanwälte Schaad, Balass, Menzl & Partner AG

(56) Entgegenhaltungen:
- WO-A-88/00493
- DE-A- 3 122 650

## Beschreibung

Die Erfindung betrifft ein Verfahren zum Weiterverarbeiten des in der Rohölraffinerie nach der Vakuumdestillation verbleibenden Rückstandes gemäss dem Oberbegriff von Anspruch 1 sowie eine Vorrichtung zur Durchführung dieses Verfahrens.

Bekanntlich wird Rohöl in der Raffinerie in mehreren Destillationsstufen verarbeitet. Die erste Destillationsstufe erfolgt bei Normaldruck, darauf folgt die Vakuumdestillation bei einem Druck von etwa 10 bis 30 mbar. Dabei werden Destillate mit einem atmosphärischen Siedepunkt von bis zu etwa 570°C gewonnen. Der nach der Vakuumdestillation verbleibende minderwertige Rückstand mit über 570°C liegendem Siedepunkt macht, je nach Qualität des zu verarbeitenden Rohöls, einen mehr oder weniger bedeutenden Anteil der ursprünglichen Rohölspeisung aus. Über die vergangenen Jahre wurde eine Zunahme von Rohölen, die eine beträchtliche Menge von Vakuumrückstand liefern, beobachtet. Deshalb kommt der Weiterverarbeitung dieses Rückstandes eine immer grössere Bedeutung zu.

Die Weiterverarbeitung des Vakuumrückstandes erfolgt in der Praxis entweder durch Lösungsmittelextraktion oder durch Cracken. Beide Verfahren sind aufwendig und ergeben neben den gewünschten Produkten eine wirtschaftlich wertlosere Fraktion von Teer und Koks. Beide, Teer und Koks sind Billigmaterialien, deren Menge möglichst niedrig gehalten werden soll.

Aus der CH-PS 666 901 ist ein Verfahren bekannt, bei dem der Vakuumrückstand zur Weiterverarbeitung einer Dünnschicht-Kurzwegdestillation unterworfen wird. Dieses bekannte Verfahren bietet eine verhältnismässig grosse Ausbeute an wertvollen Produkten, jedoch ist es technisch und wirtschaftlich aufwendig. Ausserdem erfordert es den Einsatz von aufwendigen Zusatzapparaturen. Da der weiterzuverarbeitende Rückstand nach der Vakuumdestillation eine zu hohe Temperatur aufweist, muss er vor der Dünnschicht-Kurzwegdestillation abgekühlt werden; d.h. sein Wärmegehalt kann nicht voll nutzbringend eingesetzt werden.

In der DE-A 31 22 650 wird ein Verfahren beschrieben, bei dem Rohöl zunächst bei Atmosphärendruck und die verbleibenden Rückstände unter Vakuum destilliert werden. Der erhaltene Vakuumrückstand wird gecrackt.

Die Verarbeitung von Vakuumrückstand in einer Rohölraffinerie wird in der WO-A-88 00493 mittels Dünnschicht-Kurzwegdestillation beschrieben. Eine besondere Form des Crackens wird dabei durch Erhitzen der Verdampferflächen auf eine wesentlich über die Temperatur der Speisung liegende Temperatur herbeigeführt.

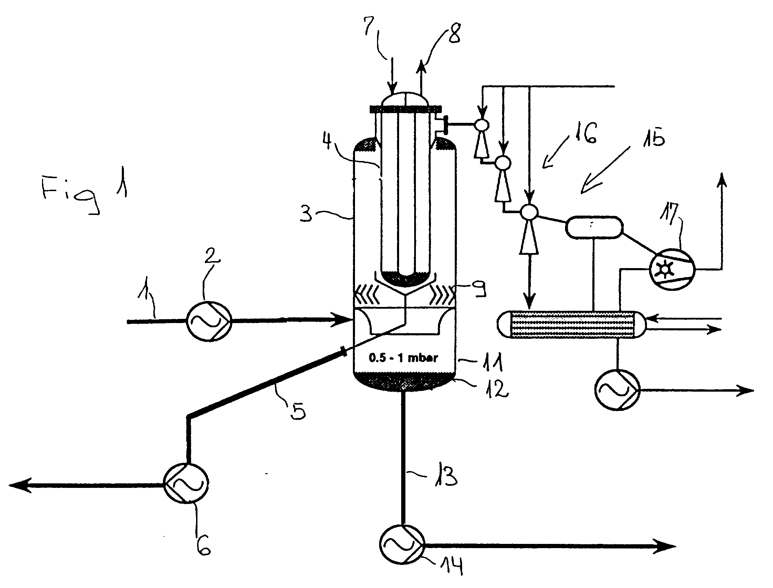

Aus Ullmann's Encyclopedia of Industrial Chemistry (Fifth Edition, Volume B 3), Seiten 3-14, Fig. 1 ist die Kondensation innerhalb einer Flashkammer bekannt.

Aufgabe der vorliegenden Erfindung ist es, ein wirtschaftlicheres und vor allem apparativ weniger aufwendiges Verfahren für die Weiterverarbeitung des Rückstandes aus der Vakuumstufe von Erdölraffenerien vorzuschlagen. Insbesondere soll durch das erfindungsgemässe Verfahren die Ausbeute an schwerem Gasöl (Heavy Vacuum Gas Oil) erhöht und damit die Menge des verbleibenden teerartigen Rückstandes minimiert werden.

Diese Aufgabe wird durch die Merkmale des kennzeichnenden Teils von Anspruch 1 gelöst. Bevorzugte Ausführungsformen der Erfindung bilden den Gegenstand der Ansprüche 2 bis 10.

Die Flash-Destillation wird fachsprachlich auch als Entspannungsdestillation bezeichnet. Bei diesem Verfahren erfolgt die Verdampfung der Speisung durch die Entspannung, d.h. Druckverminderung. Dabei wird erfindungsgemäss ein grosser Teil des Wärmeinhaltes des Vakuumrückstandes genutzt, so dass letzterer ohne Kühlung direkt der Flash-Destillation zugeführt werden kann. Die Flash-Destillation arbeitet, verglichen mit der vorangehenden Vakuumdestillation, bei geringeren Drücken, jedoch sind diese mit weniger als 5 mbar, vorzugsweise mit 0,3 bis 1 mbar, noch mit relativ einfachen und preiswerten Vakuumeinrichtungen erzeugbar, beispielsweise mit einer Mehrstufen-Dampfstrahl-Vakuumanlage. Gleichzeitig entfällt die bei der Dünnschicht-Kurzwegdestillation erforderliche Vorentgasungsstufe und der Einsatz von rotierenden Dünnschichtverdampfern.

Ein weiterer wesentlicher Vorteil der Erfindung ist es, dass das erhaltene Destillat weitgehend schwermetallfrei ist, insbesondere, wenn durch eine Vorexpansion der Speisung durch Tropfenabscheider und/oder Umleitung der Speisung in der Flashkammer die Nebelbildung verhindert wird bzw. entstehende Tröpfchen vor dem Kondensieren der Brüden gesammelt werden. Die Minimierung des Schwermetallgehaltes ist, im Hinblick auf das Cracken des Destillates, bei dem die empfindlichen Katalysatoren durch Schwermetalle vergiftet werden, wichtig.

Die Erfindung wird anhand der Figuren weiter veranschaulicht. Es zeigen rein schematisch:
- Fig. 1: ein Fliessbild einer Ausführungsform des erfindungsgemässen Verfahrens;
- Fig. 2: einen horizontalen Schnitt durch eine Flashkammer oder Flashbox zur Durchführung des erfindungsgemässen Verfahrens und
- Fig. 3: einen achsialen Schnitt durch eine Flashkammer oder Flashbox zur Durchführung des erfindungsgemässen Verfahrens.

Wie in Fig. 1 gezeigt wird, wird bei der Durchführung des erfindungsgemässen Verfahrens der Vakuumrückstand 1 aus der vorangehenden (nicht dargestellten) Vakuumdestillation mittels einer Speisepumpe 2 einem Flashbox 3 zugeführt. Da in der Flashbox ein niedrigerer Duck als in der vorangehenden (nicht dargestellten) Vakuumkolonne herrscht, verdampfen die leichter siedenden Anteile der Speisung beim Eintritt in die Flashbox infolge der Entspannung. In der Flaschbox herrscht vozugsweise ein Druck von weniger als 5 mbar, vorzugsweise 0,3 bis 1 mbar. Die Brüden werden mittels eines innerhalb der Flashbox 3 angeordneten Kondensators 4 kondensiert und über eine Leitung 5 mittels einer Destillatpumpe 6 weggefürt. Die Kühlung des Kondensators erfolgt beispielse mittels Warmwasser, dessen Fliessrichtung mit den Pfeilen 7, 8 angezeigt wird. Vor dem Kodensator 4 sind horizontale Tropfenabscheider 9 angeordnet, die die Tropfen vor Einreichen des Kondensators 4 sammeln und dem unteren Teil 11 der Flashbox 3 zuführen. In diesem unteren Teil 11 wird auch der Rückstand 12 gesammelt und vom Destillat getrennt über die Leitung 13 mittels einer Rückstandspumpe 14 der Weiterverarbeitung zugeführt. Der dargestellten Flash-Destillation kann eine zweite Flash-Destillation mit vorangehender Vorwärmung nachgeschaltet werden.

Das Vakuum in der Flashbox 3 wird mittels einer Vakuumanlage 15, die eine dreistufige Dampfstrahlvakuumpumpe 16 mit nachgeschalteter Wasserringpumpe 17 aufweist, erzeugt.

Eine Flashbox 21 ist in Fig. 2 durch einen horizontalen Schnitt im einzelnen dargestellt. Innerhalb des Mantels 22 der Flashbox 21 sind konzentrisch von aussen nach innen ein Tropfenabscheider 23 mit vertikalen Lamellenblechen 24 und ein mit Warmwasser betriebener Kondensator 25 angeordnet.

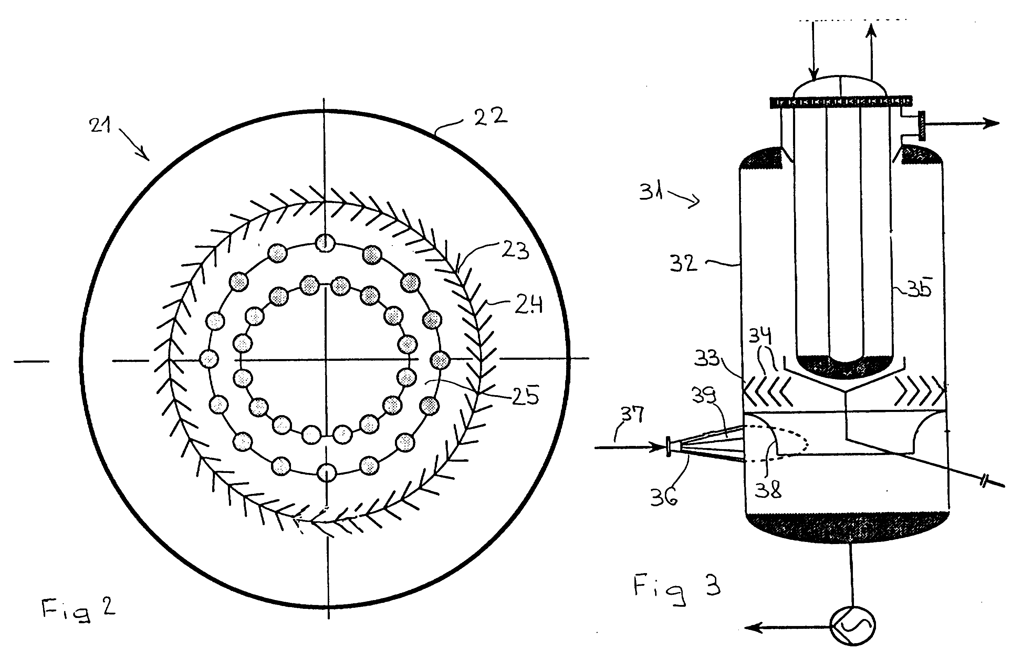

In Fig. 3 ist eine weitere Flashbox 31 in achsialem Schnitt mit einem innerhalb seines Mantels 32 angeordneten Tropfenabscheider 33 mit horizontalen Lamellenblechen 34 und einem Kondensator 35 dargestellt. Ein Speisekanal 36 mündet tangential in der Flashbox 31. Es ist mit auf den Flashbox 31 zu erweitertem Querschnitt ausgebildet. Der Erweiterungsfaktor beträgt vorzugsweise 50 bis 100. Im Speisekanal 36 ist ein Richtgitter 39 angeordnet, um eine gleichmässige Verteilung einer Speisung 37 zu sichern. Die durch den Speisekanal 36 in die Flashbox 31 gelangende Speisung 37 wird zuerst an einem Richtblech 38 umgelenkt. Die Wegführung des Destillates und des Rückstandes erfolgt wie in Fig. 1 im einzelnen dargestellt.

Der mit dem erfindungsgemässen Verfahren erhältliche Anteil an schwerem Gasöl beträgt, in Abhängigkeit von der Betriebsweise der vorgeschalteten Vakuumkolonne und dem Druck in der Flashbox, 10 bis 30 % der Speisemenge der Flashdestillation. Das Destillat ist von hoher Qualität, insbesondere enthält es nur geringe Mengen an unerwünschten Asphaltenen und Schwermetallen.

Die Destillatmenge kann durch Anordnung einer mit Wärmeträgeröl beschickten Vorwärmstufe, in der die Speisung der Flashbox um 10 bis 20°C erwärmt wird, erhöht werden. Infolge dere kurzen Verweilzeit des Vakuumrückstandes auf einer hohen Temperatur wird kein Cracken beobachtet.

Bei der Verdampfung infolge der Expansion in der Flashbox sinkt die Temperatur, so dass dem erfindungsgemässen Verfahren eine Dünnschicht-/Kurzwegdestillation, gemäss dem Stand der Technik, ohne grossen Kühlaufwand nachgeschaltet werden kann.

Das erfindungsgemässe Verfahren wird an zwei Beispielen, die mit zwei verschiedenen Erdölqualitäten, nämlich mit Arabian Light und Venezuela ausgeführt wurden, veranschaulicht. In der nachfolgenden Tabelle werden die Betriebsbedingungen bei der Vakuumdestillation, deren Rückstand erfindungsgemäss weiterverarbeitet wird, sowie dessen Schwermetallgehalt angegeben. Dann folgen die Betriebsbedingungen des erfindungsgemässen Verfahrens und die Angaben betr. Destillatmenge. Wie der Metallgehalt des Destillates zeigt, wurde dieser durch das erfindungsgemässe Verfahren stark reduziert.

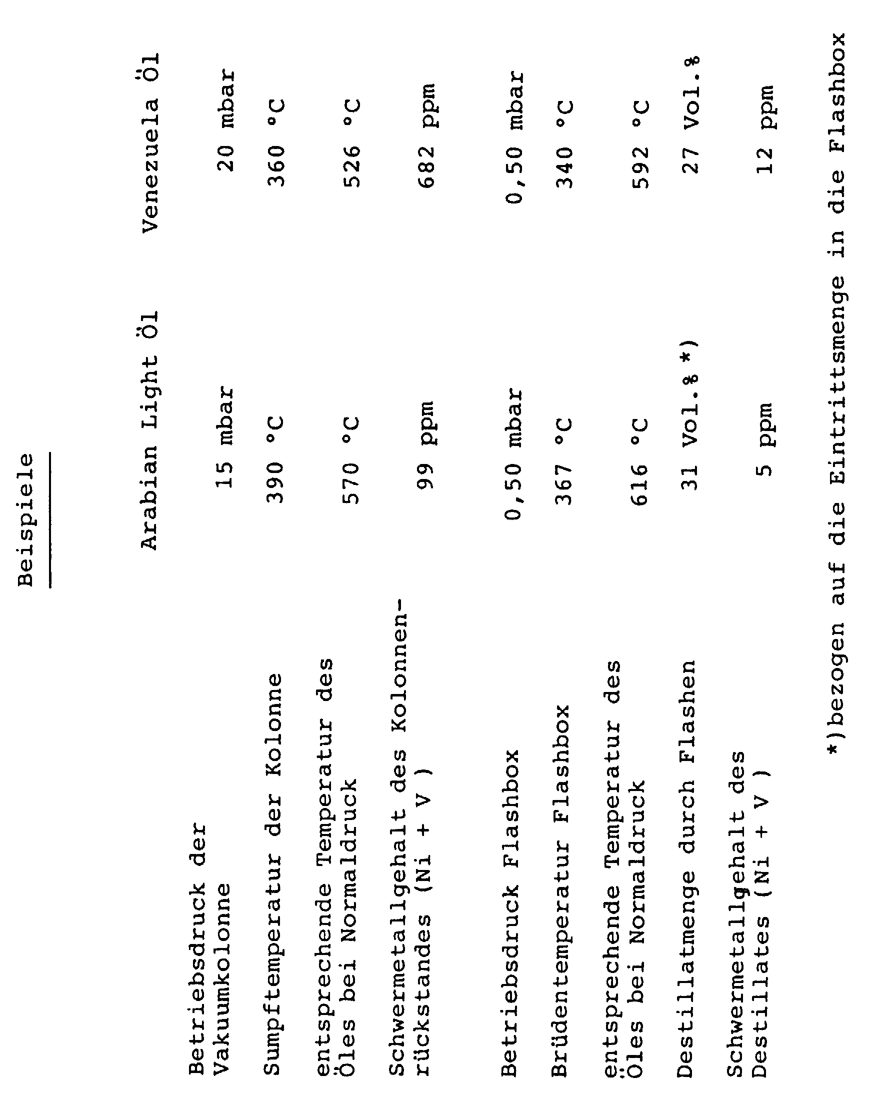

## Patentansprüche

1. Verfahren zum Weiterverarbeiten des in einer Rohölraffinerie nach der Vakuumdestillation verbleibenden Rückstandes, dadurch gekennzeichnet, dass man den nach der Vakuumdestillation verbleibenden Rückstand einer Flash-Destillation unterwirft und ein Destillat und einen Rückstand gewinnt, wobei man das Destillat innerhalb der Flashkammer kondensiert.

2. Verfahren nach Anspruch 1, dadurch gekennzeichnet, dass man die Flash-Destillation bei einem Systemdruck von kleiner als 5 mbar, vorzugsweise von 0,3 bis 1 mbar, durchführt.

3. Verfahren nach einem der vorangehenden Ansprüche, dadurch gekennzeichnet, dass man den Rückstand der Vakuumdestillation vor der Flash-Destillation vorwärmt.

4. Verfahren nach einem der vorangehenden Ansprüche, dadurch gekennzeichnet, dass man den nach einer ersten Flash-Destillation erhaltenen Rückstand erwärmt und einer zweiten Flash-Destillation unterwirft.

5. Verfahren nach einem der vorangehenden Ansprüche, dadurch gekennzeichnet, dass man den Rückstand der Vakuumdestillation bei der Speisung, bereits vor der Flashkammer, expandieren lässt.

6. Verfahren nach einem der vorangehenden Ansprüche, dadurch gekennzeichnet, dass man den Speisestrom beim Flashen in eine vorbestimmte Richtung, vorzugsweise vom Kondensator weg, führt.

7. Verfahren nach einem der vorangehenden Ansprüche, dadurch gekennzeichnet, dass man die beim Flashen entstehenden Tröpfchen vor der Kondensation auffängt.

8. Vorrichtung zur Durchführung des Verfahrens nach einem der vorangehenden Ansprüche mit einer Flashkammer (3,21,31) mit einer darin angeordneten Kondensationseinrichtung (4,25,35), gekennzeichnet durch einen tangential in die Flashkammer einmündenden Speisekanal (36) mit einem sich auf die Flashkammer (3,21,31) zu konisch erweiternden Querschnitt.

9. Vorrichtung nach Anspruch 8, dadurch gekennzeichnet, dass dem Kondensator (4,25,35) in der Flashkammer (3,21,31) ein Tropfenabscheider (9,23,33) vorgeordnet ist.

10. Vorrichtung nach einem der Ansprüche 8 und 9, dadurch gekennzeichnet, dass nach der Einmündung des Speisekanals in die Flashkammer (31) ein Richtelement (38) für die Weglenkung des Speisestromes vom Kondensator (35) angeordnet ist.

## Claims

1. Process for the further processing of the residue remaining after the vacuum distillation in a crude oil refinery, characterized in that the residue remaining after the vacuum distillation is subjected to a flash distillation and a distillate and a residue are produced, the distillate being condensed within the flash chamber.

2. Process according to Claim 1, characterized in that the flash distillation is carried out at a system pressure of less than 5 mbar, preferably from 0.3 to 1 mbar.

3. Process according to one of the preceding claims, characterized in that the vacuum distillation residue is preheated prior to the flash distillation.

4. Process according to one of the preceding claims, characterized in that the residue obtained after a first flash distillation is heated and subjected to a second flash distillation.

5. Process according to one of the preceding claims, characterized in that the vacuum distillation residue is allowed to expand already upstream of the flash chamber during the feed.

6. Process according to one of the preceding claims, characterized in that the feed stream is conducted during the flashing in a predetermined direction, preferably away from the condenser.

7. Process according to one of the preceding claims, characterized in that the droplets resulting during flashing are collected upstream of the condensation.

8. Apparatus for carrying out the process according to one of the preceding claims having a flash chamber (3, 21, 31) having a condensation device (4, 25, 35) disposed therein, characterized by a feed channel (36) which opens tangentially into the flash chamber and has a cross section expanding conically towards the flash chamber (3, 21, 31).

9. Apparatus according to Claim 8, characterized in that a demister (9, 23, 33) is arranged upstream of the condenser (4, 25, 35) in the flash chamber (3, 21, 31).

10. Apparatus according to one of Claims 8 and 9, characterized in that a guide element (38) for deflecting the feed stream away from the condenser (35) is disposed downstream of the opening of the feed channel into the flash chamber (31).

## Revendications

1. Procédé pour le traitement ultérieur du résidu subsistant après une distillation sous vide dans une raffinerie de pétrole brut, caractérisé en ce que l'on soumet le résidu subsistant après une distillation sous vide à une distillation éclair et l'on récupère un distillat et un résidu, dans lequel on condense le distillat à l'intérieur de la chambre éclair.

2. Procédé selon la revendication 1, caractérisé en ce que l'on réalise la distillation éclair à une pression de système inférieure à 5 mbars, de préférence de 0,3 à 1 mbar.

3. Procédé selon l'une quelconque des revendications précédentes, caractérisé en ce que l'on préchauffe le résidu de la distillation sous vide avant la distillation éclair.

4. Procédé selon l'une quelconque des revendications précédentes, caractérisé en ce que l'on chauffe le résidu obtenu après une première distillation éclair et qu'on le soumet à une deuxième distillation éclair.

5. Procédé selon l'une quelconque des revendications précédentes, caractérisé en ce que l'on laisse le résidu de la distillation sous vide se détendre dans l'alimentation juste devant la chambre éclair.

6. Procédé selon l'une quelconque des revendications précédentes, caractérisé en ce que l'on dirige le courant d'alimentation lors de la vaporisation éclair dans une direction prédéterminée, de préférence en s'éloignant du condenseur.

7. Procédé selon l'une quelconque des revendications précédentes, caractérisé en ce que l'on recueille, lors de la vaporisation éclair, les gouttelettes créées avant la condensation.

8. Dispositif pour réaliser le procédé selon l'une quelconque des revendications précédentes, avec une chambre éclair (3, 21, 31), avec un dispositif de condensation disposé dans celle-ci (4, 25, 35), caractérisé par un canal d'alimentation (36) débouchant tangentiellement dans la chambre éclair avec une section s'élargissant de façon conique sur la chambre éclair (3, 21, 31).

9. Dispositif selon la revendication 8, caractérisé en ce qu'un pare-gouttes (9, 23, 33) est disposé devant le condenseur (4, 25, 35) dans la chambre éclair (3, 21, 31).

10. Procédé selon l'une quelconque des revendications 8 et 9, caractérisé en ce qu'un déflecteur (38) pour la déflexion du courant d'alimentation provenant du condenseur (35) est disposé après l'embouchure du canal d'alimentation dans la chambre éclair (31).
